# EUROPÄISCHE PATENTSCHRIFT

(11) **EP 2 979 908 B1**
(45) Veröffentlichungstag und Bekanntmachung des Hinweises auf die Patenterteilung: **11.09.2019**
(21) Anmeldenummer: 15177899.0
(22) Anmeldetag: 22.07.2015
(51) Int. Cl.: B60J 1/20

(54) **BESCHATTUNGSVORRICHTUNG FÜR EIN TRANSPARENTES FLÄCHENTEIL EINES KRAFTFAHRZEUGS**
SHADING DEVICE FOR A TRANSPARENT SURFACE OF A MOTOR VEHICLE
DISPOSITIF D'OMBRAGE POUR UNE PARTIE PLATE TRANSPARENTE D'UN VEHICULE AUTOMOBILE

(30) Priorität: 01.08.2014 DE 102014215151; 16.09.2014 DE 102014218566
(43) Veröffentlichungstag der Anmeldung: 03.02.2016
(73) Patentinhaber: BOS GmbH & Co. KG, 73760 Ostfildern (DE)
(72) Erfinder: Maier, Matthias, 73733 Esslingen (DE); Meyer, Ronald, 73760 Ostfildern (DE); Walter, Herbert, 73061 Ebersbach (DE)
(74) Vertreter: Patentanwälte Ruff, Wilhelm, Beier, Dauster & Partner mbB

(56) Entgegenhaltungen:
- EP-A1- 1 188 591
- EP-A2- 1 123 825
- WO-A1-2014/090759
- DE-A1- 10 019 787

## Beschreibung

Die Erfindung betrifft eine Beschattungsvorrichtung für ein transparentes Flächenteil eines Kraftfahrzeugs mit einem flexiblen Beschattungsgebilde, das zwischen einer kompakt abgelegten Ruheposition und einer das transparente Flächenteil verdeckenden Beschattungsposition in einem Fahrzeuginnenraum verlagerbar ist, mit zwei fahrzeugfesten, nicht-parallelen seitlichen Führungsanordnungen, die einen Verlagerungsweg des Beschattungsgebildes auf gegenüberliegenden Seiten flankieren, mit einem formstabilen Auszugprofil, das an einem in Auszugrichtung vorderen Stirnendbereich des Beschattungsgebildes angeordnet ist, wobei dem Auszugprofil Antriebsmittel zur Parallelverlagerung des Auszugprofils zwischen der Ruheposition und der Beschattungsposition des Beschattungsgebildes zugeordnet sind, sowie mit einem biegbaren Querführungsstrang, der sich an dem vorderen Stirnendbereich des Beschattungsgebildes quer zur Auszugrichtung des Beschattungsgebildes über dessen Breite erstreckt und jeweils mit einem seitlichen Führungsstrangabschnitt im Bereich der gegenüberliegenden seitlichen Führungsanordnungen abhängig von dem Verlagerungsweg des Beschattungsgebildes in zugeordnete Aufnahmeräume eintaucht.

Eine derartige Beschattungsvorrichtung ist aus der EP 1 800 922 B1 bekannt. Die bekannte Beschattungsvorrichtung ist für eine Heckscheibe eines Personenkraftwagens vorgesehen und weist ein flexibles Beschattungsgebilde auf, das auf einer Wickelwelle auf- und abwickelbar gehalten ist. Das Beschattungsgebilde weist in ausgezogenem Zustand eine Rechteckform auf. An einem in Auszugrichtung vorderen Stirnendbereich des Beschattungsgebildes ist ein Auszugprofil angeordnet, das mithilfe von seitlichen Führungsschlitten in fahrzeugfesten seitlichen Führungsanordnungen gehalten ist. Den seitlichen Führungsanordnungen sind als Antriebsmittel dienende Flexwellen zugeordnet, die die Führungsschlitten derart synchron verlagern, dass das Auszugprofil zwischen einer Ruhestellung des Beschattungsgebildes und einer Beschattungsstellung des Beschattungsgebildes an den seitlichen Führungsanordnungen parallel verlagert wird. Die fahrzeugfesten Führungsanordnungen verlaufen nicht parallel zueinander, sondern sind nach Art von Trapezschenkeln schräg aufeinander zulaufend ausgerichtet. Dabei ist der Abstand der Führungsanordnungen im Bereich der Beschattungsstellung des Auszugprofils geringer als die Breite des Beschattungsgebildes, so dass seitliche Beschattungsgebildeabschnitte bei einer Verlagerung des Beschattungsgebildes aus der Ruhestellung in die Beschattungsstellung in Aufnahmetaschen im Bereich der seitlichen Führungsanordnungen eintauchen. An einem in Auszugrichtung vorderen Stirnendbereich ist das Beschattungsgebilde mit einem Querführungsband versehen, das den vorderen Stirnendbereich des Beschattungsgebildes versteift, um das Einführen der seitlichen Beschattungsgebildeabschnitte in die Aufnahmeräume im Bereich der fahrzeugfesten Führungsanordnungen zu erleichtern.

Aufgabe der Erfindung ist es, eine Beschattungsvorrichtung der eingangs genannten Art zu schaffen, die eine sichere Einführung seitlicher Beschattungsgebildeabschnitte in fahrzeugfeste Aufnahmeräume gewährleistet.

Diese Aufgabe wird dadurch gelöst, dass das Auszugprofil einen Mittelteil sowie zwei in dem Mittelteil geführte seitliche Teleskopabschnitte umfasst, die mit längs des Auszugprofils erstreckten Gleitführungsspuren für die seitlichen Führungsstrangabschnitte des Querführungsstranges versehen sind, die eine relative Linearverschiebbarkeit zwischen den Teleskopabschnitten und den Führungsstrangabschnitten bei gleichzeitiger Stützung gegen ein Ausweichen der Führungsstrangabschnitte gewährleisten. Die längs des Auszugprofils erstreckten Gleitführungsspuren bilden einen längserstreckten Hohlraum, der auf die Abmessungen der seitlichen Führungsstrangabschnitte abgestimmt ist, um die gewünschte Linearführung dieser Führungsstrangabschnitte zu erzielen. Entsprechende Gleitführungsspuren sind an beiden seitlichen Teleskopabschnitten in identischer Weise vorgesehen, so dass identische Stützungen und Linearführungen beidseitig des Mittelteils des Auszugprofils erzielt werden. Die erfindungsgemäße Lösung eignet sich in besonders vorteilhafter Weise für den Einsatz im Bereich einer Heckscheibenanordnung eines Personenkraftwagens, die als transparentes Flächenteil im Sinne der Erfindung dient. Alternativ kann die Beschattungsvorrichtung auch einem anderen Seiten- oder Frontscheibenbereich eines Kraftfahrzeugs oder auch einem transparenten Dachteil zugeordnet sein. Durch die erfindungsgemäße Lösung ist eine vollständige Beschattung des entsprechenden transparenten Flächenteils ermöglicht, obwohl die fahrzeugfesten Führungsanordnungen nicht-parallel zueinander verlaufen. In vorteilhafter Weise sind die nicht-parallelen fahrzeugfesten Führungsanordnungen so fahrzeuginnenraumseitig im Bereich des entsprechenden transparenten Flächenteils verlegt, dass mit der Erstreckung des Beschattungsgebildes zwischen diesen Führungsanordnungen sich eine vollständige Beschattung und Verdeckung des transparenten Flächenteils - vom Fahrzeuginnenraum aus gesehen - ergibt. Dadurch ist ein besonders guter Sonnen- und Sichtschutz gewährleistet.

In Ausgestaltung der Erfindung ist die Gleitführungsspur in jedem Teleskopabschnitt durch einen Gleitführungskanal gebildet, der mit einem Aufnahmeschlitz im Mittelteil für die Halterung des Querführungsstranges fluchtet. Dadurch ist der Querführungsstrang über die gesamte Länge des teleskopierbaren Auszugprofils in einer Ebene und geradlinig geführt und gestützt, wodurch ein Ausknicken oder Ausweichen des Querführungsstranges bei entsprechenden Verlagerungsbewegungen des Auszugprofils zuverlässig vermieden werden kann.

In weiterer Ausgestaltung der Erfindung weist der Querführungsstrang eine Steifigkeit auf, die größer ist als eine Steifigkeit des Beschattungsgebildes. Dadurch wird eine Stützung des Stirnendbereichs des Beschattungsgebildes auch in den seitlichen Beschattungsgebildeabschnitten erzielt, in denen keine Linearführung und Stützung durch das teleskopierbare Auszugprofil erfolgt.

In weiterer Ausgestaltung der Erfindung ist der Querführungsstrang durch Aussteifung des vorderen Stirnendbereichs des Beschattungsgebildes selbst, insbesondere durch Umschlagen und Tränken mit einem aushärtendem Fluid, gebildet. Ein derartiges Fluid kann ein geeignetes Harz sein. Maßgeblich ist es, dass die bereits beschriebene Biegsamkeit der seitlichen Führungsstrangabschnitte gewährleistet bleibt.

In weiterer Ausgestaltung der Erfindung weist der Querführungsstrang zwischen den seitlichen Führungsstrangabschnitten einen Mittelstrangabschnitt auf, der unterschiedlich gestaltet ist zu den seitlichen Führungsstrangabschnitten. Der Mittelstrangabschnitt kann als Kunststoffband gestaltet sein, das durch Vernähen, Verschweißen oder Verkleben mit dem Stirnendbereich des Beschattungsgebildes verbunden ist. Die seitlichen Führungsstrangabschnitte können durch Aussteifung oder durch separate Kunststoffbandabschnitte gebildet sein.

In weiterer Ausgestaltung der Erfindung sind die seitlichen Führungsstrangabschnitte durch Umschlagen und Fixieren von Beschattungsgebildeabschnitten des vorderen Stirnendbereichs gebildet. Diese Führungsstrangabschnitte werden vorzugsweise derart hergestellt, dass das Beschattungsgebilde im Bereich des Mittelstrangabschnittes bei der Erstellung des Zuschnittes ausgeschnitten wird, so dass beidseitig des späteren Mittelstrangabschnittes Längsstreifen verbleiben, die in Längsrichtung des Beschattungsgebildes abragen. Diese werden durch ein- oder mehrmalige Falzung oder durch Einrollen umgeschlagen und anschließend durch Vernähen oder Verschweißen oder Verkleben oder auch durch Tränken mit einem aushärtenden Fluid in dieser umgeschlagenen Stellung fixiert.

In weiterer Ausgestaltung der Erfindung besteht das Kunststoffband aus PTFE und weist eine Breite zwischen 8 und 12 mm und eine Dicke zwischen 0,3 und 0,5 mm auf. In vorteilhafter Weise wird als Querführungsstrang ein Kunststoffband aus PTFE eingesetzt, das eine Breite von 10 mm und eine Dicke von 0,4 mm besitzt. Die Herstellung des Bands aus PTFE ermöglicht eine hohe Steifigkeit und dennoch eine ausreichende Flexibilität, um die Krümmung des Querführungsbands im Bereich der seitlichen Führungsanordnungen in den entsprechenden Aufnahmeraum hinein zu ermöglichen. Zudem bleibt die entsprechende Elastizität des PTFE-Bands über einen großen Temperaturbereich konstant. Das PTFE-Band ist verschleißarm und leicht. Vorzugsweise wird das PTFE-Band, das den Querführungsstrang bildet, mit dem Stirnendbereich des Beschattungsgebildes verklebt oder in eine entsprechende stirnseitige Schlaufe des Beschattungsgebildes eingenäht.

In weiterer Ausgestaltung der Erfindung ist der Mittelstrangabschnitt durch Umschlagen und Fixierung eines Beschattungsgebildeabschnittes des vorderen Stirnendbereichs gebildet. Der Mittelstrangabschnitt wird vorzugsweise dadurch hergestellt, dass ein Zuschnitt des Beschattungsgebildes im Bereich des Mittelstrangabschnittes gegenüber den seitlichen Führungsstrangabschnitten länger ausgeführt ist, so dass im Bereich des Mittelstrangabschnittes ein ergänzender Längsstreifen verbleibt, der in Längsrichtung des Beschattungsgebildes über die seitlichen Führungsstrangabschnitte hinausragt. Dieser Teil des Zuschnittes wird anschließend durch ein- oder mehrmalige Falzung oder durch Einrollen umgeschlagen. Zur Verstärkung kann in dem eingeschlagenen Bereich ein Verstärkungsband oder eine Verstärkungsleiste integriert sein. Alternativ oder ergänzend wird eine Fixierung des Längsstreifens nach dem Falzen oder Einrollen durch Vernähen, Verschweißen, Verkleben oder auch durch Tränken mit einem aushärtenden Fluid in der entsprechend umgeschlagenen Stellung vorgesehen. Das Umschlagen und Fixieren des Mittelstrangabschnittes kann ergänzend zu entsprechend umgeschlagenen und fixierten seitlichen Führungsstrangabschnitten erfolgen. Alternativ können die seitlichen Führungsstrangabschnitte auch unterschiedlich zu dem Mittelstrangabschnitt verstärkt und/oder versteift sein.

Weitere Vorteile und Merkmale der Erfindung ergeben sich aus den Ansprüchen sowie aus der nachfolgenden Beschreibung eines bevorzugten Ausführungsbeispiels der Erfindung, das anhand der Zeichnungen dargestellt ist.
- Fig. 1: zeigt schematisch einen Teil eines Personenkraftwagens im Bereich einer Heckscheibenanordnung, der fahrzeuginnenraumseitig einer Ausführungsform einer erfindungsgemäßen Beschattungsvorrichtung zugeordnet ist,
- Fig. 2: die Darstellung nach Fig. 1, bei der die Beschattungsvorrichtung in ihre Beschattungsstellung überführt ist,
- Fig. 3: in vergrößerter perspektivischer Darstellung einen Ausschnitt der Beschattungsvorrichtung nach den Fig. 1 und 2,
- Fig. 4: in anderer perspektivischer Darstellung die Beschattungsvorrichtung nach Fig. 3,
- Fig. 5: in einer Seitenansicht die Beschattungsvorrichtung gemäß den Fig. 1 bis 4,
- Fig. 6: in vergrößerter, schematischer Querschnittsdarstellung einen Teilbereich der Beschattungsvorrichtung nach den Fig. 1 bis 5,
- Fig. 7: eine weitere Querschnittsdarstellung der Beschattungsvorrichtung in einer zu der Schnittebene nach Fig. 6 parallelen Schnittebene,
- Fig. 8: in einer weiteren Querschnittsdarstellung in einer weiteren, zu den Darstellungen nach Fig. 6 und 7 parallelen Schnittebene einen Teilbereich der Beschattungsvorrichtung nach den Fig. 1 bis 7,
- Fig. 9: schematisch ein Beschattungsgebilde der Beschattungsvorrichtung nach den Fig. 1 bis 8,
- Fig. 10: schematisch einen Ausschnitt eines Beschattungsgebildes einer weiteren Ausführungsform einer erfindungsgemäßen Beschattungsvorrichtung,
- Fig. 11: schematisch einen Ausschnitt eines Beschattungsgebildes einer weiteren Ausführungsform einer erfindungsgemäßen Beschattungsvorrichtung und
- Fig. 12: schematisch einen weiteren Teilbereich eines Beschattungsgebildes ähnlich Fig. 11.

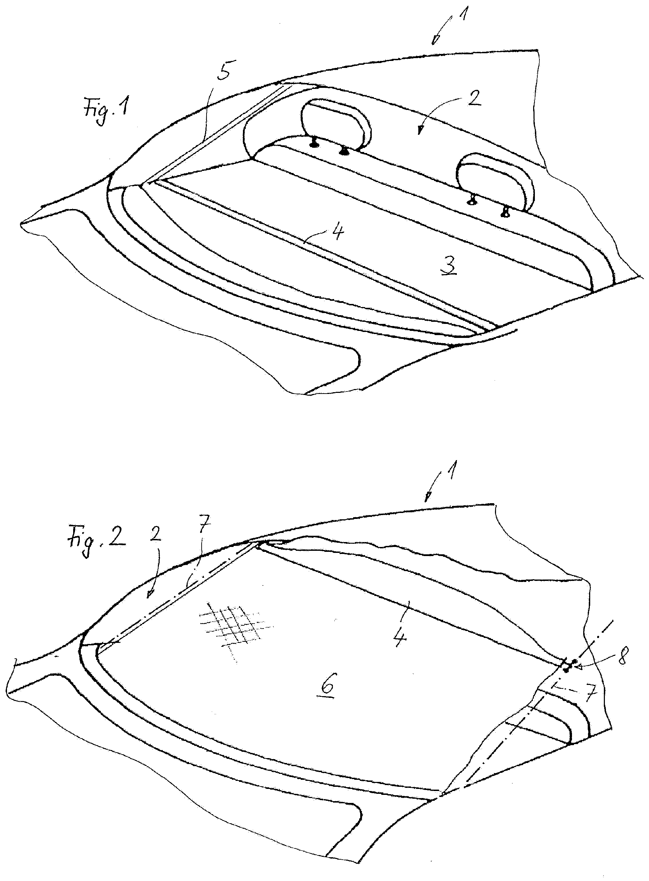

Ein Personenkraftwagen 1 weist gemäß den Fig. 1 und 2 eine Heckscheibenanordnung 2 auf, die einen Fahrzeuginnenraum oberhalb einer Fahrzeugbordkante nach hinten begrenzt. Im Fahrzeuginnenraum ist unterhalb der Heckscheibenanordnung 2 eine Hutablage 3 vorgesehen, die Teil einer tragenden Karosseriestruktur des Personenkraftwagens 1 sein kann. Nach vorne schließt an die Hutablage 3 eine Rückenlehnenanordnung einer Fondsitzbank an.

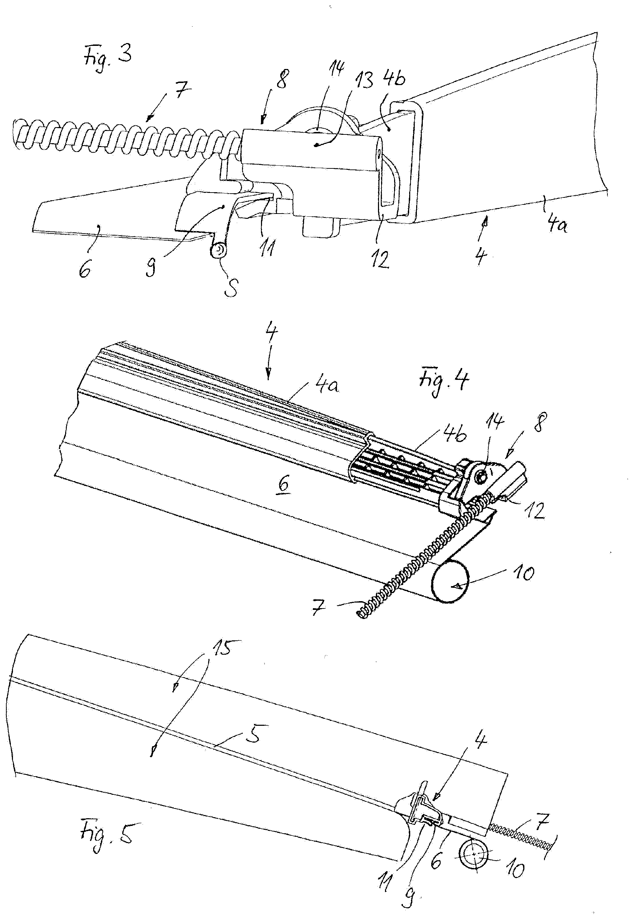

Um durch die Heckscheibenanordnung 2 von außen hindurchtretende Lichtstrahlung zu reduzieren, ist der Heckscheibenanordnung 2 eine Beschattungsvorrichtung gemäß den Fig. 1 bis 9 zugeordnet, die nachfolgend näher beschrieben wird. Die Beschattungsvorrichtung weist ein flexibles Beschattungsgebilde 6 auf, das bahnförmig auf einer Wickelwelle 10 auf- und abwickelbar gehalten ist. Die Wickelwelle 10 ist unterhalb der Hutablage 3 mit in Fahrzeugquerrichtung erstreckter Drehachse drehbar gelagert. Im Bereich der Hutablage 3 ist ein nicht näher dargestellter Durchtrittsschlitz vorgesehen, durch den das Beschattungsgebilde 6 bei einer Überführung aus der Ruhestellung (Fig. 1) in die Beschattungsstellung (Fig. 2) hindurchgeführt wird. Das Beschattungsgebilde 6 weist eine zumindest im Wesentlichen rechteckige Form auf und wird in mehreren Lagen gleichmäßig auf die Wickelwelle 10 aufgewickelt. An einem in Auszugrichtung vorderen Stirnendbereich ist das Beschattungsgebilde 6 an einem Auszugprofil 4 befestigt, das sich über die gesamte Breite des Beschattungsgebildes 6 erstreckt. Das Auszugprofil 4 ist an seinen gegenüberliegenden Stirnenden mithilfe jeweils eines Führungsschlittens 8 (Fig. 3 und 4) in fahrzeugfesten seitlichen Führungsanordnungen längsverschiebbar gehalten. Die fahrzeugfesten seitlichen Führungsanordnungen sind, wie anhand der Fig. 1 und der Fig. 2 erkennbar ist, im Bereich von C-Säulenabschnitten der Karosserietragstruktur befestigt. Jede seitliche Führungsanordnung weist einen zur Fahrzeugmitte hin offenen Führungsschlitz 5 auf, dessen Gestaltung und Funktion nachfolgend näher beschrieben wird. Der Führungsschlitz 5 ist vorzugsweise jeweils bündig in ein Innenraumverkleidungsteil integriert, das im Bereich des jeweiligen C-Säulenabschnittes angeordnet ist.

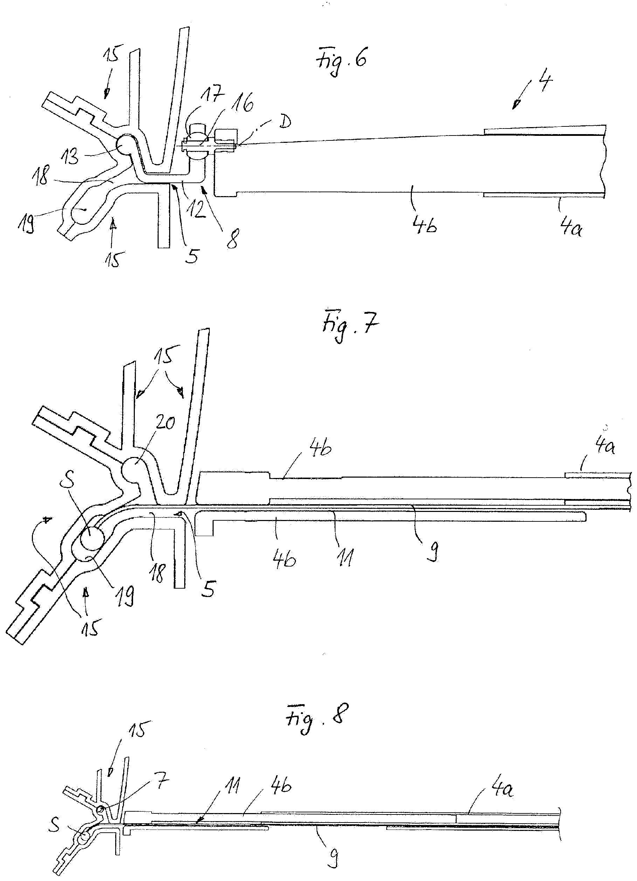

Das Auszugprofil 4 setzt sich aus einem als Hohlprofil gestalteten Mittelteil 4a und zwei auf gegenüberliegenden Seiten des Mittelteils 4a angeordneten seitlichen Teleskopabschnitten 4b zusammen, die in dem Mittelteil 4a längsverschiebbar geführt sind. Die Führungsschlitten 8 sind stirnseitig mit dem jeweiligen Teleskopabschnitt 4b verbunden. Die beiden Teleskopabschnitte 4b sind in Längsrichtung des Auszugprofils 4 verschiebbar in dem Mittelteil 4a gelagert, um die Gesamtlänge des Auszugprofils 4 verändern zu können. Die Veränderung der Gesamtlänge des Auszugprofils 4 ist notwendig, da die seitlichen Führungsanordnungen wie auch die Führungsschlitze 5 nicht-parallel zueinander verlaufen, sondern zur Mitte hin geneigt sind und demzufolge ausgehend von der Hutablage 3 in Richtung zum Dachhimmel des Fahrzeuginnenraums aufeinander zulaufen. Das Auszugprofil 4 ist über seine beiden Teleskopabschnitte 4b mittels jeweils einer Kugelgelenkanordnung 14 drehbar relativ zu den beiden Führungsschlitten 8 gelagert. Die beiden Kugelgelenkanordnungen 14 definieren für das Auszugprofil 4 eine Drehachse D relativ zu den gegenüberliegenden Führungsschlitten 8, die exzentrisch zu einer Mittellängsachse des Auszugprofils 4 angeordnet ist. Die Kugelgelenkanordnung 14 umfasst, wie anhand der Fig. 6 erkennbar ist, zum einen einen koaxial zu der Drehachse D von dem Teleskopabschnitt 4b seitlich nach außen abragenden Lagerzapfen 16 und zum anderen ein im Führungsschlitten 8 gelagertes Kugelgelenk 17, in das der Lagerzapfen 16 koaxial eingreift. Ein nicht näher bezeichneter Axialsicherungsring sichert den Lagerzapfen 16 axial am Kugelgelenk 17.

Der Führungsschlitten 8 weist einen seitlich nach außen ragenden Führungsfortsatz 12 auf, der nach oben abgewinkelt ist und in einen zylinderartigen Führungskörper 13 übergeht, mit dem ein drucksteifer Antriebsübertragungsstrang in Form einer Flexwelle 7 koaxial verbunden ist (Fig. 3 und 4). Die Flexwelle 7 wird in nicht näher dargestellter Weise synchron mit der gegenüberliegenden Flexwelle 7 durch ein Zahnradgetriebe längsverschiebbar angetrieben, das durch einen elektrischen Antriebsmotor beaufschlagt wird.

Beide seitlichen Führungsanordnungen sowie beide Seiten des Auszugprofils 4 und beide Seiten des Beschattungsgebildes 6 sind spiegelsymmetrisch, im Übrigen jedoch identisch zueinander gestaltet, so dass zur Vermeidung von Wiederholungen lediglich eine Seite ausführlich beschrieben wird.

Der Führungskörper 13 des Führungsschlittens 8 ist in einem Führungskanal 20 der fahrzeugfesten seitlichen Führungsanordnung linearverschiebbar geführt, die als Aufnahmeraum im Sinne der Erfindung dient. Der Führungskanal 20 führt zudem auch die jeweilige Flexwelle 7. Der seitlich nach außen ragende Führungsfortsatz 12 des Führungsschlittens 8 ragt in den Führungsschlitz 5 hinein, der zu dem nach oben führenden Führungskanal 20 hin offen ist. An den Führungsschlitz 5 schließt zudem seitlich nach außen sowie nach unten ein schmaler Aufnahmeraum 18 an, der einen erweiterten Stützkanalabschnitt 19 umfasst. Sowohl der Führungsschlitz 5 als auch der Führungskanal 20, der Aufnahmeraum 18 und der Stützkanalabschnitt 19 erstrecken sich in Längsrichtung des Beschattungsgebildes 6 gesehen durchgängig wenigstens über einen gesamten Verfahrweg des Auszugprofils 4 und damit über den Verlagerungsweg des Beschattungsgebildes 6 zwischen seiner Ruhestellung (Fig. 1) und seiner Beschattungsstellung (Fig. 2).

Der Führungsschlitz 5, der Führungskanal 20, der Aufnahmeraum 18 und der Stützkanalabschnitt 19 sind in einer Gehäusekonstruktion 15 integriert, die aus mehreren, miteinander verbundenen Schalenabschnitten besteht. Die Schalenabschnitte können aus Kunststoff oder aus Metall hergestellt sein. Anhand der Fig. 6 bis 8 ist erkennbar, dass die Gehäusekonstruktion 15 aus drei miteinander verbundenen Schalenabschnitten besteht, die fahrzeugfest montiert sind, indem sie insbesondere mit anschließenden Fahrzeuginnenraumverkleidungsteilen und/oder tragenden Karosserieteilen fest verbunden sind.

Das Beschattungsgebilde 6 ist mit dem Auszugprofil 4 verbunden über ein Querführungsband 9, das als Querführungsstrang im Sinne der Erfindung dient und sich durchgängig über eine gesamte Breite des Beschattungsgebildes 6 quer zur Auszugrichtung des Beschattungsgebildes 6 erstreckt. Das Querführungsband 9 weist eine höhere Steifigkeit auf als das flexible Beschattungsgebilde 6 und ist aus einem PTFE-Band mit einer Breite von 10 mm und einer Dicke von 0,5 mm hergestellt. Das Querführungsband 9 ist durch Verklebung oder durch Einnähen in eine stirnseitige Schlaufe mit dem vorderen Stirnendbereich des Beschattungsgebildes 6 über die gesamte Breite des Beschattungsgebildes 6 durchgängig verbunden. Das Querführungsband 9 ist an dem Auszugprofil 4 gehalten, indem es in einen Aufnahmeschlitz des Mittelteils 4a des Auszugprofils 4 formschlüssig eingebracht ist. Das Querführungsband 9 ist zudem auch mit seinen seitlichen Führungsbandabschnitten, die im Bereich der Teleskopabschnitte 4b des Auszugprofils 4 erstreckt sind, mit dem Auszugprofil 4 verbunden. Hierzu ist jeder Teleskopabschnitt 4b mit einem Gleitführungskanal 11 versehen, in dem der jeweilige seitliche Führungsbandabschnitt des Querführungsbands 9 linearbeweglich gestützt ist. Die seitlichen Führungsbandabschnitte stellen Führungsstrangabschnitte im Sinne der Erfindung dar. Der Querführungskanal 11 erstreckt sich über eine maximale Auszuglänge des Teleskopabschnitts 4b relativ zum Mittelteil 4a, so dass das Querführungsband 9 zumindest weitgehend über eine gesamte Breite des Auszugprofils 4 linearbeweglich gestützt ist.

Das Querführungsband 9 weist an seinen gegenüberliegenden Stirnenden seitlich außerhalb des jeweiligen Längsrands des Beschattungsgebildes 6 einen Laschenfortsatz auf, an dem ein perlenartiger Stützkörper S angespritzt oder in anderer Art und Weise befestigt ist. Dieser Stützkörper S ist in den Stützkanalabschnitt 19 der Gehäusekonstruktion 15 in Längsrichtung des Beschattungsgebildes 6 eingeführt und verhindert, dass das Querführungsband 9 durch eine zur Fahrzeugmitte hin gewandte Querkraft aus dem Stützkanalabschnitt 19 herausgezogen werden kann. Denn die Verjüngung des Aufnahmeraumes am Übergang vom Stützkanalabschnitt 19 zum schmalen Aufnahmeraum 18 bewirkt eine formschlüssige Stützung der Stützkörper S in Querrichtung. Das Querführungsband 9 ist mit seinen seitlichen Führungsbandabschnitten im Führungsschlitz 5 und im Aufnahmeraum 18 nach unten gekrümmt und führt hiermit die anschließenden seitlichen Beschattungsgebildeabschnitte des Beschattungsgebildes 6 bei einer Längsverlagerung des Auszugprofils 4 längs der Führungsschlitze 5 in den Aufnahmeraum 18 und in den Strömungskanalabschnitt 19 hinein. Der Aufnahmeraum 18 und der Strömungskanalabschnitt 19 speichern demzufolge bei einer Verlagerung des Beschattungsgebildes 6 aus der Ruhestellung in die Beschattungsstellung die seitlich in den Führungsschlitz 5 hineingeführten Beschattungsgebildeabschnitte des rechteckigen Beschattungsgebildes. Das Eintreten und Hindurchtreten der seitlichen Beschattungsgebildeabschnitte durch den jeweiligen Führungsschlitz 5 erfolgt analog dem Stand der Technik (EP 1 800 922 B1) aufgrund der aufeinander zulaufenden, fahrzeugfesten seitlichen Führungsanordnungen und Führungsschlitze 5 einerseits und dem Parallelverlauf der seitlichen Längsränder des rechteckigen Beschattungsgebildes andererseits beim Auf- oder Abwickeln des Beschattungsgebildes 6 durch eine Längsverlagerung des Auszugprofils 4.

Wie anhand der Fig. 5 erkennbar ist, bildet das mit dem Beschattungsgebilde 6 stirnseitig verbundene Querführungsband 9 einen Keder, der in den als Kedernut gestalteten Aufnahmeschlitz des Mittelteils 4a formschlüssig eingeführt ist. Auch die Gleitführungskanäle 11 der Teleskopabschnitte 4b bilden kederartige Nuten mit dem Unterschied, dass im Bereich der Gleitführungskanäle 11 die Teleskopabschnitte 4b relativ zum Querführungsband 9 längsverschiebbar angeordnet sind.

Anhand der Fig. 5 wie auch anhand der Fig. 1 ist erkennbar, dass die Führungsschlitze 5 in jeder Gehäusekonstruktion 15 zum einen geradlinig und zum anderen in der Ausziehebene des Beschattungsgebildes 6 verlaufen. Der Aufnahmeschlitz des Mittelteils 4a und die Gleitführungskanäle 11 der Teleskopabschnitte 4b fluchten in Längsrichtung des Auszugprofils 4 miteinander, so dass sich eine geradlinige und ebene Stützung des Querführungsbands 9 ergibt. Diese kederartige Aufnahme des Querführungsbands 9 im Auszugprofil 4 ist in Abstand zu der Drehachse D vorgesehen, um die das Auszugprofil 4 an den gegenüberliegenden Führungsschlitten 8 drehbar gelagert ist. Auf das Beschattungsgebilde 6 wird eine permanente Spannkraft ausgeübt, indem in der Wickelwelle 10 eine Rückholfederanordnung integriert ist, die die Wickelwelle 10 in Aufwickelrichtung drehmomentbeaufschlagt. Durch diese Drehmomentbeaufschlagung übt das Beschattungsgebilde 6 mittels des Querführungsbands 9, das im Auszugprofil 4 gehalten ist, ein Drehmoment auf das Auszugprofil 4 um die Drehachse D aus, so dass sich das Auszugprofil 4 in der Ausrichtung gemäß den Fig. 4 und 5 ausrichtet, während das Auszugprofil 4 aus der Ruhestellung in die Beschattungsstellung oder umgekehrt bewegt wird. Der Beschattungsstellung oder der Endstellung können Anschläge zugeordnet sein, die die Drehmomentbeaufschlagung des Auszugprofils 4 ausgleichen und das Auszugprofil 4 in der entsprechenden Endstellung in eine andere Ausrichtung relativ zu den Führungsschlitten 8 verschwenken.

Um auch im weiteren Verlauf der Länge des Beschattungsgebildes 6 ein ungewünschtes Herausziehen der seitlichen Beschattungsgebildeabschnitte aus dem entsprechenden Aufnahmeraum 18, 19 mit der jeweiligen Gehäusekonstruktion 15 zu vermeiden, sind über die Länge des Beschattungsgebildes 6 verteilt auf jeder Seite dem jeweiligen seitlichen Längsrand des Beschattungsgebildes 6 weitere zwei Stützkörper S zugeordnet, die über Befestigungslaschen 22 mit den seitlichen Beschattungsgebildeabschnitten verbunden sind. Auch die Stützkörper S sind perlenartig gestaltet und in ihren Abmessungen auf den Stützkanalabschnitt 19 so abgestimmt, dass sie spielbehaftet in diesem längsverlagerbar sind. Bei einer Verlagerung des Beschattungsgebildes 6 mittels des Auszugprofils 4 in den Führungsschlitzen 5 der Gehäusekonstruktionen 15 gleiten auch die weiteren Stützkörper S in die Stützkanalabschnitte 19 hinein, so dass sich im Wesentlichen über die gesamte Auszuglänge des Beschattungsgebildes 6 eine Querstützung ergibt, die ein Herausgleiten aus dem jeweiligen Führungsschlitz 5 zuverlässig vermeidet. Bei einem Aufwickeln des Beschattungsgebildes 6 auf die Wickelwelle 10 werden die Stützkörper S mit den Befestigungslaschen 22 zwangsläufig außerhalb des jeweiligen Stirnrands der Wickelwelle 10 mit aufgewickelt, so dass sich keine Veränderung der Dicke der Wickellagen aufgrund dieser Stützkörper S ergibt.

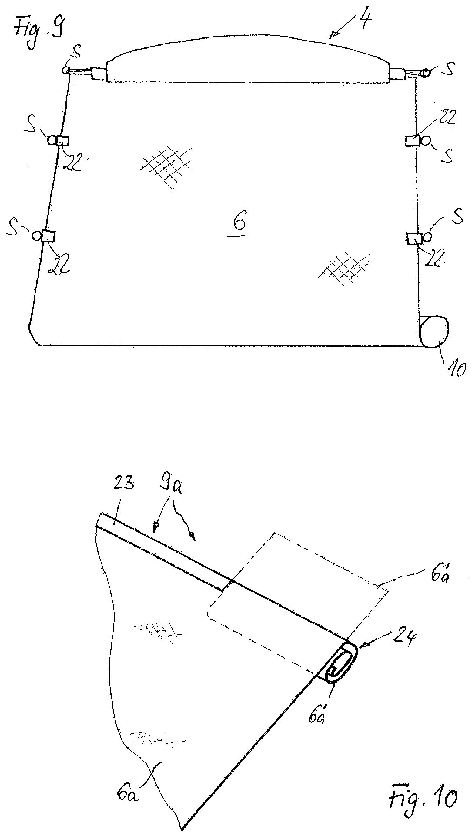

Anhand der Darstellung nach Fig. 10 ist ein gegenüber den zuvor beschriebenen Ausführungsformen geringfügig modifiziertes flexibles Beschattungsgebilde 6a für eine weitere Ausführungsform einer erfindungsgemäßen Beschattungsvorrichtung vorgesehen. Das nachfolgend näher beschriebene Beschattungsgebilde 6a wird bei einer Beschattungsvorrichtung eingesetzt, wie sie zuvor anhand der Figuren 1 bis 9 beschrieben wurde. Wesentlicher Unterschied beim Beschattungsgebilde 6a ist, dass der in Auszugrichtung vordere Stirnendbereich mit einem Querführungsstrang 9a versehen ist, der im Bereich eines Mittelführungsstrangabschnittes 23 und im Bereich von zwei auf gegenüberliegenden Seiten an den Mittelführungsstrangabschnitt 23 anschließenden seitlichen Führungsstrangabschnitten 24 unterschiedlich gestaltet ist. Der Mittelführungsstrangabschnitt 23 wird durch ein Kunststoffband gebildet, das analog der zuvor beschriebenen Ausführungsformen mit dem Stirnendbereich des Beschattungsgebildes 6a verklebt, verschweißt oder vernäht ist. Die seitlichen Führungsstrangabschnitte 24 hingegen werden durch umgeschlagene Materialabschnitte 6'a des Beschattungsgebildes 6a gebildet, wobei die umgeschlagenen Beschattungsgebildeabschnitte 6'a nach dem Umschlagen zusätzlich durch Vernähen, Verkleben oder Verschweißen oder durch Tränken mittels eines aushärtenden Fluids, vorzugsweise in Form eines Harzes, fixiert werden. Das Umschlagen der Materialabschnitte 6'a kann durch Umfalzen oder durch Einrollen gemäß Fig. 10 erfolgen. Zur Erzielung dieser Materialabschnitte 6'a wird der Zuschnitt des Beschattungsgebildes 6a bei seiner Herstellung am vorderen Stirnendbereich im Bereich des Mittelführungsstrangabschnittes 23 ausgeschnitten, so dass die seitlichen Materialabschnitte 6'a über den Mittelführungsstrangabschnitt in Längsrichtung des Beschattungsgebildes 6a laschen- oder lappenartig nach vorne abragen. Diese überstehenden Materialabschnitte 6'a können dann in beschriebener Weise umgeschlagen und fixiert werden. Durch das Umschlagen ergibt sich eine Materialverdickung am Stirnendbereich des Beschattungsgebildes 6a, die zu der nötigen Quersteifigkeit für die gewünschte Führungs- und Biegefunktion der seitlichen Führungsstrangabschnitte 24 führt.

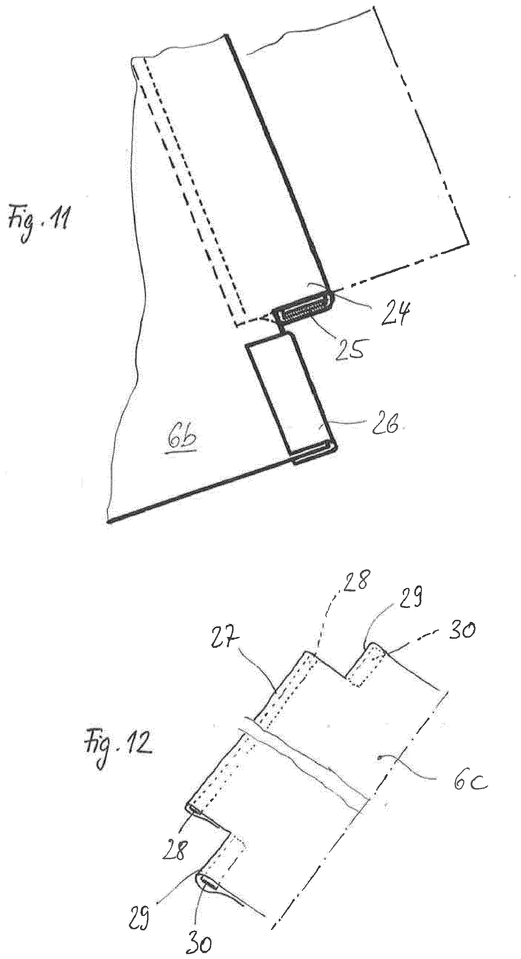

Anhand der Fig. 11 und 12 sind flexible Beschattungsgebilde 6b oder 6c vorgesehen, die gegenüber den zuvor beschriebenen Ausführungsformen geringfügig modifiziert sind. Sowohl das Beschattungsgebilde 6b als auch das Beschattungsgebilde 6c wird bei einer Beschattungsvorrichtung eingesetzt, wie sie zuvor anhand der Fig. 1 bis 9 beschrieben wurde. Sowohl bei dem Beschattungsgebilde 6b als auch bei dem Beschattungsgebilde 6c ist der in Auszugrichtung vordere Stirnendbereich mit einem relativ zu seitlichen Führungsstrangabschnitten 26, 29 unterschiedlich gestalteten Mittelstrangabschnitt 24, 27 versehen.

Bei der Ausführungsform nach Fig. 11 wird der Mittelstrangabschnitt 24 durch einen umgeschlagenen Materialabschnitt des Beschattungsgebildes 6b gebildet, wobei der Materialabschnitt um eine Versteifungsleiste 25 herumgelegt ist. Der umgeschlagene Teil des Materialabschnittes des Mittelstrangabschnittes 24 wird durch Vernähen, Verkleben, Verschweißen oder durch Tränken mittels eines aushärtenden Fluids, vorzugsweise in Form eines Harzes, fixiert. Zuvor wurde die Verstärkungsleiste 25 in den umgeschlagenen Materialabschnitt eingelegt. Die seitlichen Führungsstrangabschnitte 25 sind durch Bandstreifen gebildet, die außenseitig über den Stirnendbereich des Beschattungsgebildes 6b umgefalzt und mit diesem durch Verkleben, Verschweißen oder Vernähen fest verbunden sind. Der Bandstreifen 26 ist als separates Bandmaterial gestaltet, das durch Umlegen um den Stirnendbereich und entsprechendes Fixieren mit dem Stirnendbereich des Beschattungsgebildes 6b verbunden ist.

Bei der Ausführungsform nach Fig. 12 werden sowohl der Mittelstrangabschnitt 27 als auch die seitlichen Führungsstrangsabschnitte 29 durch Umschlagen entsprechender Materialabschnitte des Beschattungsgebildes 6c und durch Fixieren der umgeschlagenen Materialabschnitte auf dem Flächengebilde 6c gebildet. Alle umgeschlagenen Materialabschnitte sind durch eine Einlegeleiste 28, 30 zusätzlich versteift, wobei die Einlegeleiste 28 und die Einlegeleisten 30 unterschiedlich zueinander gestaltet sein können. Die Einlegeleisten 28, 30 können als Versteifungsbänder oder -streifen aus einem Kunststoffmaterial oder einem Textilmaterial gestaltet sein. Das Umschlagen kann in gleicher Weise - wie zuvor beschrieben - durch Umfalzen oder Einrollen erfolgen. Nach dem Umschlagen wird der umgeschlagene Teil des Materialabschnittes sowohl im Bereich des Mittelstrangabschnittes 27 als auch im Bereich der seitlichen Führungsstrangabschnitte 29 fixiert, vorzugsweise durch Vernähen, Verkleben, Verschweißen oder durch Tränken mittels eines aushärtenden Fluids.

## Patentansprüche

1. Beschattungsvorrichtung für ein transparentes Flächenteil eines Kraftfahrzeugs mit einem flexiblen Beschattungsgebilde (6), das zwischen einer kompakt abgelegten Ruheposition und einer das transparente Flächenteil (2) verdeckenden Beschattungsposition in einem Fahrzeuginnenraum verlagerbar ist, mit zwei fahrzeugfesten, nicht-parallelen seitlichen Führungsanordnungen, die einen Verlagerungsweg des Beschattungsgebildes (6) auf gegenüberliegenden Seiten flankieren, mit einem formstabilen Auszugprofil (4), das an einem in Auszugrichtung vorderen Stirnendbereich des Beschattungsgebildes (6) angeordnet ist, wobei dem Auszugprofil (4) Antriebsmittel (7) zur Parallelverlagerung des Auszugprofils (4) zwischen der Ruheposition und der Beschattungsposition des Beschattungsgebildes (6) zugeordnet sind, sowie mit einem biegbaren Querführungsstrang (9), der sich an dem vorderen Stirnendbereich des Beschattungsgebildes (6) quer zur Auszugrichtung des Beschattungsgebildes (6) über dessen Breite erstreckt und jeweils mit einem seitlichen Führungsstrangabschnitt im Bereich der gegenüberliegenden seitlichen Führungsanordnungen abhängig von dem Verlagerungsweg des Beschattungsgebildes (6) in zugeordnete Aufnahmeräume (18, 19) eintaucht, wobei das Auszugprofil (4) einen Mittelteil (4a) sowie zwei in dem Mittelteil (4a) geführte seitliche Teleskopabschnitte (4b) umfasst, **dadurch gekennzeichnet, dass** die Teleskopabschnitte (4b) mit längs des Auszugprofils (4) erstreckten Gleitführungsspuren (11) für die seitlichen Führungsstrangabschnitte des Querführungsstranges (9) versehen sind, die eine relative Linearverschiebbarkeit zwischen den Teleskopabschnitten (4b) und den Führungsstrangabschnitten bei gleichzeitiger Stützung gegen ein Ausweichen der Führungsstrangabschnitte gewährleisten.

2. Beschattungsvorrichtung nach Anspruch 1, **dadurch gekennzeichnet, dass** die Gleitführungsspur in jedem Teleskopabschnitt (4b) durch einen Gleitführungskanal (11) gebildet ist, der mit einem Aufnahmeschlitz im Mittelteil (4a) für die Halterung des Querführungsstranges (9) fluchtet.

3. Beschattungsvorrichtung nach Anspruch 1 oder 2, **dadurch gekennzeichnet, dass** der Querführungsstrang (9) eine Steifigkeit aufweist, die größer ist als eine Steifigkeit des Beschattungsgebildes (6).

4. Beschattungsvorrichtung nach Anspruch 3, **dadurch gekennzeichnet, dass** der Querführungsstrang als Kunststoffband (9) gestaltet ist, das mit dem Stirnendbereich des Beschattungsgebildes durch Vernähen, durch Verschweißen oder durch Verkleben verbunden ist.

5. Beschattungsvorrichtung nach Anspruch 4, **dadurch gekennzeichnet, dass** das Kunststoffband (9) aus PTFE besteht und eine Breite zwischen 8 und 12 mm und eine Dicke zwischen 0,3 und 0,5 mm aufweist.

6. Beschattungsvorrichtung nach Anspruch 3, **dadurch gekennzeichnet, dass** der Querführungsstrang durch Aussteifung des vorderen Stirnendbereichs des Beschattungsgebildes selbst, insbesondere durch Umschlagen und Tränken mit einem aushärtendem Fluid, gebildet ist.

7. Beschattungsvorrichtung nach Anspruch 6, **dadurch gekennzeichnet, dass** der Querführungsstrang (9a) zwischen den seitlichen Führungsstrangabschnitten (24) einen Mittelstrangabschnitt (23) aufweist, der unterschiedlich gestaltet ist zu den seitlichen Führungsstrangabschnitten (24).

8. Beschattungsvorrichtung nach Anspruch 7, **dadurch gekennzeichnet, dass** die seitlichen Führungsstrangabschnitte (24) durch Umschlagen und Fixieren von Beschattungsgebildeabschnitten (6'a) des vorderen Stirnendbereichs gebildet sind.

9. Beschattungsvorrichtung nach Anspruch 7 oder 8, **dadurch gekennzeichnet, dass** der Mittelstrangabschnitt (24, 27) durch Umschlagen und Fixieren eines Beschattungsgebildeabschnittes des vorderen Stirnendbereichs gebildet ist.

10. Beschattungsvorrichtung nach Anspruch 8 oder 9, **dadurch gekennzeichnet, dass** die Beschattungsgebildeabschnitte (6'a) durch Vernähen, Verschweißen oder Verkleben fixiert sind.

## Claims

1. Shading device for a transparent surface part of a motor vehicle, having a flexible shading structure (6) which can be displaced between a rest position, in which it is stowed in a compact manner, and a shading position, in which it covers the transparent surface part (2), in a vehicle interior, having two non-parallel lateral guide arrangements which are fixed with respect to the vehicle and which flank a displacement travel of the shading structure (6) on opposite sides, having a dimensionally stable pull-out profile (4) which is arranged on a front face end region of the shading structure (6) as viewed in the pulling-out direction, the pull-out profile (4) having assigned thereto drive means (7) for parallel displacement of the pull-out profile (4) between the rest position and the shading position of the shading structure (6), and having a flexible transverse guidance strand (9) which extends on the front end face region of the shading structure (6) transverse to the pull-out direction of the shading structure (6) over the width thereof and with a respective lateral guidance strand section in the region of the opposite lateral guide arrangements protrudes into associated receiving spaces (18, 19), in a manner dependent on the displacement travel of the shading structure (6), wherein the pull-out profile (4) comprises a middle part (4a) and two lateral telescopic sections (4b) guided in said middle part (4a),
**characterized in that**
the telescopic sections (4b) are provided with sliding guide tracks (11) extending along the pull-out profile (4) for the lateral guidance strand sections of the transverse guidance strand (9), which ensure a relative linear displaceability between the telescopic sections (4b) and the guidance strand sections and equally give support to prevent spreading of the guidance strand sections.

2. Shading device according to claim 1, **characterized in that** the sliding guide track in each telescopic section (4b) is constituted by a sliding guide channel (11) which aligns with a receiving slot in the middle part (4a) for retaining the transverse guidance strand (9).

3. Shading device according to claim 1 or 2, **characterized in that** the transverse guidance strand (9) has a stiffness which is greater than a stiffness of the shading structure (6).

4. Shading device according to claim 3, **characterized in that** the transverse guidance strand is configured as a synthetic material strip (9) which is connected to the face end region of the shading structure by sewing, by welding or by adhesive bonding.

5. Shading device according to claim 4, **characterized in that** the synthetic material strip (9) is made of PTFE and has a width between 8 and 12 mm and a thickness between 0.3 and 0.5 mm.

6. Shading device according to claim 3, **characterized in that** the transverse guidance strand is formed by stiffening of the front face end region of the shading structure as such, in particular by folding over and soaking with a curable fluid.

7. Shading device according to claim 6, **characterized in that** the transverse guidance strand (9a) includes, between the lateral guidance strand sections (24), a middle strand section (23) which has a design differing from that of the lateral guidance strand sections (24).

8. Shading device according to claim 7, **characterized in that** the lateral guidance strand sections (24) are formed by folding over and fixing of shading structure sections (6'a) of the front face end region.

9. Shading device according to claim 7 or 8, **characterized in that** the middle strand section (24, 27) is formed by folding over and fixing of a shading structure section of the front face end region.

10. Shading device according to claim 8 or 9, **characterized in that** the shading structure sections (6'a) are fixed by sewing, welding or adhesive bonding.

## Revendications

1. Dispositif d'ombrage pour une partie plate transparente d'un véhicule automobile avec une structure d'ombrage (6) flexible, qui est déplaçable dans un intérieur de véhicule entre une position de repos rangée compactement et une position d'ombrage couvrant la partie plate transparente (2), avec deux arrangements de guidage latéraux non-parallèles, fixés au véhicule, ces arrangements flanquant une voie de déplacement de la structure d'ombrage (6) sur côtés opposés, avec un profil de tirage (4) dimensionnellement stable disposé sur une zone d'extrémité frontale de la structure d'ombrage (6) avant dans la direction de tirage, des moyens d'entraînement (7) pour un déplacement parallèle du profil de tirage (4) entre la position de repos et la position d'ombrage de la structure d'ombrage (6) étant associés au profil de tirage (4), ainsi qu'avec une gaine de guidage transversal (9) souple qui s'étend sur la zone avant d'extrémité frontale de la structure d'ombrage (6) transversalement par rapport à la direction de tirage de la structure d'ombrage (6) sur sa largeur et passe dans des espaces de réception (18, 19) associés par une section de la gaine de guidage transversal latérale respective dans la région des arrangements de guidage latéraux opposés en fonction de la voie de déplacement de la structure d'ombrage (6), dans lequel le profil de tirage (4) comporte une partie centrale (4a) ainsi que deux sections télescopiques (4b) latérales guidées dans la partie centrale (4a),
**caractérisé en ce que**
les sections télescopiques (4b) sont munies de pistes de glisse de guidage (11) s'étendant le long du profil de tirage (4) pour les sections de gaine de guidage latérales de la gaine de guidage transversal (9), assurant une capacité de déplacement linéaire relative entre les sections télescopiques (4b) et les sections de gaine de guidage en même temps supportant pour empêcher une esquive des sections de gaine de guidage.

2. Dispositif d'ombrage selon la revendication 1, **caractérisé en ce que** la piste de glisse de guidage dans chaque section télescopique (4b) est formée par un canal de glisse de guidage (11) qui est aligné avec une fente de réception dans la partie centrale (4a) pour l'attachement de la gaine de guidage transversal (9).

3. Dispositif d'ombrage selon la revendication 1 ou 2, **caractérisé en ce que** la gaine de guidage transversal (9) présente une rigidité qui est supérieure à une rigidité de la structure d'ombrage (6).

4. Dispositif d'ombrage selon la revendication 3, **caractérisé en ce que** la gaine de guidage transversal (9) est configurée sous forme de bande synthétique (9) qui est connectée à la zone d'extrémité frontale de la structure d'ombrage par couture, soudure ou liaison adhésive.

5. Dispositif d'ombrage selon la revendication 4, **caractérisé en ce que** la bande synthétique (9) se compose de PTFE et présente une largeur entre 8 et 12 mm et une épaisseur entre 0,3 et 0,5 mm.

6. Dispositif d'ombrage selon la revendication 3, **caractérisé en ce que** la gaine de guidage transversal est formée par raidissement de la zone avant d'extrémité frontale de la structure d'ombrage même, en particulier par pliage et trempage d'un fluide durcissant.

7. Dispositif d'ombrage selon la revendication 6, **caractérisé en ce que** la gaine de guidage transversal (9a) présente entre les sections de gaine de guidage latérales (24) une section de gaine centrale (23) de configuration différente de celle des sections de gaine de guidage latérales (24).

8. Dispositif d'ombrage selon la revendication 7, **caractérisé en ce que** les sections de gaine de guidage latérales (24) sont formées par pliage et fixage de sections de la structure d'ombrage (6'a) de la zone avant d'extrémité frontale.

9. Dispositif d'ombrage selon la revendication 7 ou 8, **caractérisé en ce que** la section de gaine centrale (24, 27) est formée par pliage et fixage d'une section de la structure d'ombrage de la zone avant d'extrémité frontale.

10. Dispositif d'ombrage selon la revendication 8 ou 9, **caractérisé en ce que** les sections de structure d'ombrage (6'a) sont fixées par couture, soudure ou liaison adhésive.
